# EUROPEAN PATENT APPLICATION

(11) **EP 4 329 078 A1**
(43) Date of publication of application: **28.02.2024**
(21) Application number: 22926517.8
(22) Date of filing: 21.02.2022
(51) Int. Cl.: H01M 50/457

(54) **BATTERY, BATTERY SEPARATOR, AND SEPARATOR PREPARATION METHOD**

(71) Applicant: Shenzhen Senior Technology Material Co., Ltd., Shenzhen, Guangdong 518106 (CN); Senior Material (Europe) AB, 633 62 Eskilstuna (SE)
(72) Inventor: WANG, Yanjie, Shenzhen, Guangdong 518106 (CN); CHEN, Zelin, Shenzhen, Guangdong 518106 (CN); LIN, Lujing, Shenzhen, Guangdong 518106 (CN); SHEN, Jianqiang, hangzhou, Jiangsu 213100 (CN); CHEN, Xiufeng, Shenzhen, Guangdong 518106 (CN)
(74) Representative: Elzaburu S.L.P.
(86) International application number: PCT/CN2022/077087
(87) International publication number: WO 2023/155190

(57) **Abstract**

The present invention provides a battery, a separator for a battery and a method for preparing the separator, where the separator for a battery includes a base film and a coating structure disposed on the base film, the coating structure includes a plurality of material layers, and each material layer contains one-dimensional nanomaterials, and average lengths of one-dimensional nanomaterials in respective material layers are decreased layer by layer in a direction away from the base film.

## Description

### TECHNICAL FIELD

The present invention relates to the field of batteries and, in particular, to a battery, a separator for a battery, and a method for preparing the separator.

### BACKGROUND

Lithium-ion battery separator is one of core components in lithium-ion batteries, and its performance has a very important impact on the overall performance of lithium-ion batteries and is one of the key technologies restricting the development of lithium-ion batteries. With the application fields of lithium-ion batteries continue to expand and the impact of lithium-ion battery products in people's life continues to deepen, people have higher and higher requirements for the performance of lithium-ion batteries. In order to meet development requirements of lithium-ion batteries, the separator, as an important component in lithium-ion batteries, should not only have good chemical stability and lower manufacturing costs, but also be capable of improving the safety performance of lithium-ion batteries, which is an important trend in the current development of lithium-ion batteries.

In the existing related art, a separator for a lithium-ion battery may include a base film and a coating covering at least one surface of the base film, and the coating may include one-dimensional nanomaterials. However, the one-dimensional nanomaterials are stacked in a disorderly manner, and thus, it is easy to cause problems such as too many gaps and few contact points, thus affecting thermal stability of the separator.

### SUMMARY

The present invention provides a battery, a separator for a battery and a method for preparing the separator, so as to solve the problems of too many gaps, few contact points and the like.

According to a first aspect of the present invention, a separator for a battery is provided, including a base film and a coating structure disposed on the base film, the coating structure includes a plurality of material layers, and each material layer contains one-dimensional nanomaterials, and average lengths of one-dimensional nanomaterials in respective material layers are decreased layer by layer in a direction away from the base film.

Optionally, the one-dimensional nanomaterials in the coating structure satisfy: 5 ≥ L50/L10 ≥ 1.3, and 4 ≥ L90/L50 ≥ 1.3;
L10 represents a length description value for the one-dimensional nanomaterials in the coating structure when 10% is used as a first target ratio;
L50 represents a length description value for the one-dimensional nanomaterials in the coating structure when 50% is used as the first target ratio;
L90 represents a length description value for the one-dimensional nanomaterials in the coating structure when 90% is used as the first target ratio; and
the length description value for the one-dimensional nanomaterials in the coating structure indicates a length of corresponding one-dimensional nanomaterials when the number of the one-dimensional nanomaterials in the coating structure is gradually accumulated in an order of length from short to long so that a ratio of a number accumulated to the corresponding one-dimensional nanomaterials to a total number of the one-dimensional nanomaterials in the coating structure reaches the first target ratio.

Optionally,
a length value of L10 for the one-dimensional nanomaterials in the coating structure is between 100 nm and 300 nm;
a length value of L50 for the one-dimensional nanomaterials in the coating structure is between 250 nm and 400 nm; and
a length value of L90 for the one-dimensional nanomaterials in the coating structure is between 350 nm and 900 nm.

Optionally, different length description values for the one-dimensional nanomaterials in different material layers are formed with respect to a same second target ratio;
a length description value for the one-dimensional nanomaterials in each material layer indicates:
a length of corresponding one-dimensional nanomaterials when the number of the one-dimensional nanomaterials in each material layer is gradually accumulated in an order of length from short to long so that a ratio of a number accumulated to the corresponding one-dimensional nanomaterials to a total number of the one-dimensional nanomaterials in each material layer reaches the second target ratio which is not 50%;
the length description values for the one-dimensional nanomaterials in the material layers are decreased gradually with respect to the same second target ratio in the direction away from the base film.

Optionally, the second target ratio is in a range of 5%-40%, or in a range of 60%-99%.

Optionally, one-dimensional nanomaterial includes at least one of the following: nanocellulose, aramid nanofiber, and polyimide nanofiber.

Optionally, in a first material layer and a second material layer which are adjacent to each other, gaps between one-dimensional nanomaterials in the first material layer are partially or completely filled with one-dimensional nanomaterials in the second material layer; where the first material layer is located at one side of the second material layer facing the base film.

According to a second aspect of the present invention, a battery including a separator involved in the first aspect and optional solutions thereof is provided.

According to a third aspect of the present invention, a method for preparing a separator is provided, which is used for preparing a separator involved in the first aspect and optional solutions thereof, and the method for preparing the separator includes:
dispersing one-dimensional nanomaterials having different lengths in a same dispersant or different dispersants to obtain at least one dispersion solution;
forming at least one corresponding slurry based on the at least one dispersion solution; and
coating the at least one slurry onto the base film, and drying the base film and the slurry to obtain the separator.

Optionally, before the dispersing the one-dimensional nanomaterials having different lengths in the same dispersant or different dispersants to obtain the at least one dispersion solution, the method further includes:
breaking raw components of the one-dimensional nanomaterials or breaking broken one-dimensional nanomaterials, and forming at least some one-dimensional nanomaterials having different lengths through performing the breaking for one or more times.

Optionally, before the dispersing the one-dimensional nanomaterials having different lengths in the same dispersant or different dispersants to obtain the at least one dispersion solution, the method further includes:
performing at least one of the following bonding processes, and forming at least some one-dimensional nanomaterials having different lengths through performing the bonding for one or more times:
bonding a raw component of an one-dimensional nanomaterial to one end of another raw component of the one-dimensional nanomaterial;
bonding a bonded one-dimensional nanomaterial to one end of one raw component; or
bonding the bonded one-dimensional nanomaterial to one end of another bonded one-dimensional nanomaterial.

Optionally, the bonding includes:
mixing one-dimensional nanomaterials to be bonded with a material rich in hydroxyl functional groups in a solution;
adding molecular sieve particles into the solution as a catalyst; and
subjecting the solution to heating, then cooling, and filtering to remove the molecular sieve so as to obtain bonded one-dimensional nanomaterials.

Optionally, the forming the at least one slurry based on the at least one dispersion solution includes:
sequentially adding an adhesive and an auxiliary agent into the dispersion solution.

Optionally, the adhesive includes at least one of the following: polyacrylic acid, lithium polyacrylate, polyvinyl alcohol, polyvinylpyrrolidone, and carboxymethyl cellulose; and
the auxiliary agent includes at least one of the following: glycerol, fluorinated alkyl ethoxy alcohol ether, sodium styrene-butadiene naphthalene sulfonate, sodium hydroxyethyl sulfate, and sodium dodecyl sulfate.

Optionally, the preparation method further includes:
adding poly(N-isopropylacrylamide) into the dispersion solution or the slurry.

In the battery, the separator for the battery and the method for preparing the separator provided in the present invention, because the length of an one-dimensional nanomaterial is related to surface energy thereof, and further related to adhesion ability onto the base film, one-dimensional nanomaterials layer by layer based on the adhesion ability in the present invention may achieve ordered distribution, compared with random distributed one-dimensional nanomaterials. this is because one-dimensional nanomaterials are ordered, thereby avoiding the formation of possible large gaps due to random and disordered distribution, and ensuring a sufficient number of contact points. Further, gaps between one-dimensional nanomaterials in a first material layer are partially or completely filled by one-dimensional nanomaterials in a second material layer, and the first material layer is located at a side of the second material layer facing the base film, thus gaps are further reduced and contact points are increased under a condition of ensuring the ordering of one-dimensional nanomaterials.

### BRIEF DESCRIPTION OF DRAWINGS

To describe the technical solutions in embodiments of the present invention or in the prior art more clearly, the following briefly introduces the accompanying drawings needed for describing the embodiments or the prior art. Apparently, the accompanying drawings in the following description illustrate merely some embodiments of the present invention, and persons of ordinary skill in the art may still derive other drawings from these accompanying drawings without creative effort.
FIG. 1 is a schematic view of a partial structure of a separator for a battery in an embodiment of the present invention.
FIG. 2 is a flow diagram of a method for preparing a separator in an embodiment of the present invention.
FIG. 3 is a schematic diagram of a variation of the length value of l50 for a material layer with a coating position in a specific example of the present invention.

Description of reference numerals:
1-separator;
11-base film; and
12-coating structure.

### DETAILED DESCRIPTION

The following clearly and comprehensively describes the technical solutions in embodiments of the present invention with reference to the accompanying drawings in embodiments of the present invention. Apparently, the described embodiments are merely a part rather than all embodiments of the present invention. All other embodiments obtained by persons of ordinary skill in the art based on embodiments of the present invention without creative effort shall fall within the protection scope of the present invention.

In the description of the specification of the present invention, it is to be understood that the orientation or positional relationship indicated by the terms "upper part", "lower part", "upper end", "lower end", "lower surface" and "upper surface" is based on the orientation or positional relationship shown in the drawings, which is only for the convenience of describing the present invention and simplifying the description, and does not indicate or imply that the indicated devices or elements must have a specific orientation, be constructed and operated in a specific orientation., thus, cannot be understood as a limitation to the present invention.

In the description of the specification of the present invention, terms "first" and "second" are only used for descriptive purposes, and cannot be understood as indicating or implying relative importance or implicitly indicating the number of indicated technical features. Therefore, the features defined as "first" and "second" may explicitly or implicitly include one or more of these features.

In the description of the present invention, "plurality" means a plurality, for example, two, three, four, etc., unless otherwise specifically defined.

In the description of the specification of the present invention, unless otherwise specified and limited, terms such as "connection" should be broadly understood, for example, it may be fixed connection, detachable connection, or integrated connection; mechanical connection, electrical connection, or communicable connection with each other; or direct connection, indirect connection through an intermediary, internal connection of two elements or interaction between two elements. For those of skill in the art, the specific meanings of the above terms in the present invention may be understood according to specific situations.

The technical solutions of the present invention will be described in detail with specific embodiments. The following specific embodiments may be combined with each other, and the same or similar concepts or processes may not be repeated in some embodiments.

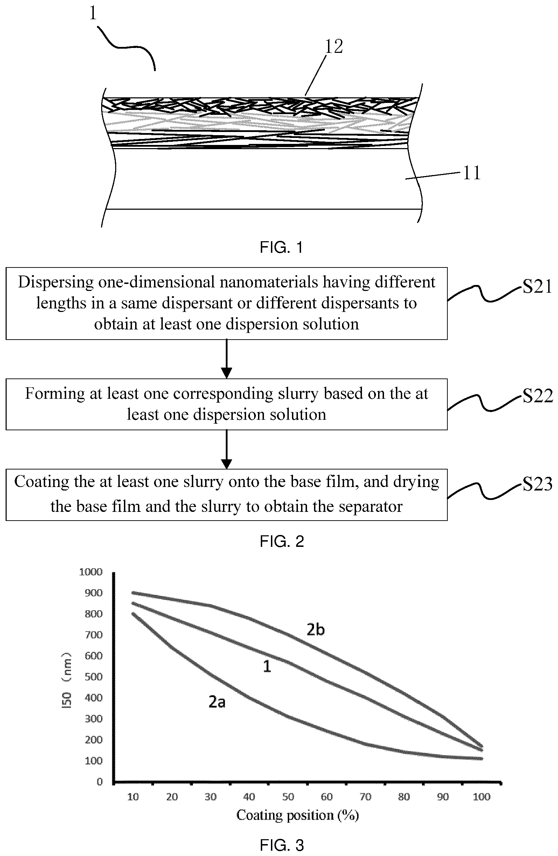

Referring to FIG. 1, an embodiment of the present invention provides a separator 1 for a battery, the separator 1 includes a base film 11 and a coating structure 12 disposed on the base film 11, the coating structure 12 includes a plurality of material layers, and each material layer contains one-dimensional nanomaterials, and average lengths of one-dimensional nanomaterials in respective material layers are decreased layer by layer in a direction away from the base film, and correspondingly, average sizes of gaps between the one-dimensional nanomaterials in respective material layers are decreased gradually.

The coating has three material layers as shown in FIG. 1, where an average length of the one-dimensional nanomaterials in the bottom layer is longer than that of the one-dimensional nanomaterials in the middle layer, and the average length of the one-dimensional nanomaterials in the middle layer is longer than that of the one-dimensional nanomaterials in the top layer. The difference between the average lengths of the one-dimensional nanomaterials in respective layers may be optionally configured, and the one-dimensional nanomaterials in the same layer may have a same length or different lengths. In one implementation, one-dimensional nanomaterial includes at least one of the following: nanocellulose, aramid nanofiber, and polyimide nanofiber. The material selection of one-dimensional nanomaterial in the embodiments of the present invention is not limited to the above examples.

In one implementation, different length description values for the one-dimensional nanomaterials in different material layers are formed with respect to a same second target ratio;
a length description value for the one-dimensional nanomaterials in each material layer indicates:
a length of corresponding one-dimensional nanomaterials when the number of the one-dimensional nanomaterials in each material layer structure is gradually accumulated in an order of length from short to long so that a ratio of a number accumulated to the corresponding one-dimensional nanomaterials a total number of the one-dimensional nanomaterials in each material layer reaches to the second target ratio. Correspondingly, among the one-dimensional nanomaterials in the corresponding material layer, a ratio of one-dimensional nanomaterials smaller than the corresponding length description value may reach the target ratio. The above description shows statistical significance of the length description value for one-dimensional nanomaterials, and an actual calculation method may be carried out according to general knowledge in the art when the length description value is actually to be determined.

In one example, the second target ratio is in a range of 5%-40%, or in a range of 60%-99%. For example, it may be 5%, 10%, 20%, 40%, 60%, 70%, 80%, 90%, 99% and so on.

In one implementation, the length description values for the one-dimensional nanomaterials in respective material layers are decreased gradually with respect to the same second target ratio in the direction away from the base film. Therefore, a trend of decrease in the one-dimensional nanomaterials layer-by-layer may be formed.

In addition, regarding the length description value for the corresponding material layer, although the above defines the meaning of the length description values by accumulating and determining the length description values based on the accumulation result, it does not mean that the statistical process is necessarily included in the actual preparation and acceptance processes. In an actual solution, for any product, as long as one-dimensional nanomaterials in the material layers are counted by using a value having the same statistical significance, and the obtained length description values have a law satisfying the above description, it does not deviate from the protection scope of this implementation. In some solutions, the above law in length may be satisfied by the selection of lengths of one-dimensional nanomaterials or by the preparation of one-dimensional nanomaterials having specific lengths.

The length description value for the one-dimensional nanomaterials in each material layer may be for example as below:
110 for the one-dimensional nanomaterials in each material layer indicates a length of corresponding one-dimensional nanomaterials when the number of the one-dimensional nanomaterials in each material layer is gradually accumulated in an order of length from short to long so that a ratio of a number accumulated to the corresponding one-dimensional nanomaterials a total number of the one-dimensional nanomaterials in each material layer reaches 10%;
l50 for the one-dimensional nanomaterials in each material layer indicates a length of corresponding one-dimensional nanomaterials when the number of the one-dimensional nanomaterials in each material layer is gradually accumulated in the order of length from short to long so that the ratio of the number accumulated to the corresponding one-dimensional nanomaterials to the total number of the one-dimensional nanomaterials in each material layer reaches 50%. l50 may also be understood as representing an average length for each material layer to a certain extent; and
l90 for the one-dimensional nanomaterials in each material layer indicates a length of corresponding one-dimensional nanomaterials when the number of the one-dimensional nanomaterials in each material layer is gradually accumulated in the order of length from short to long so that the ratio of the number accumulated to the corresponding one-dimensional nanomaterials to the total number of the one-dimensional nanomaterials in each material layer reaches 90%.

In a case in which the decrement of l50 (i.e., the average length) is achieved, the decrement of one or more other length description values (e.g., l90 and/or 110) may also be achieved.

Further, in the above solution, it may be fully reflected through the change trend of the defined length description values that under l50 and respective second target ratios, one-dimensional nanomaterials show a decreasing trend layer by layer, thereby ensuring an orderly distribution of the one-dimensional nanomaterials. This further makes the length gradient distribution of the one-dimensional nanomaterials more centralized and unified, which is more conducive to reducing the number and size of gaps, increasing the number of contact points, and further improving heat resistance.

In one implementation,
a length value of L10 of the one-dimensional nanomaterials in the coating structure is between 100 nm and 300 nm;
a length value of L50 of the one-dimensional nanomaterials in the coating structure is between 250 nm and 400 nm; and
a length value of L90 of the one-dimensional nanomaterials in the coating structure is between 350 nm and 900 nm.
L10 for the one-dimensional nanomaterials in the coating structure represents a length description value for the one-dimensional nanomaterials in the coating structure when 10% is used as a first target ratio;
L50 for the one-dimensional nanomaterials in the coating structure represents a length description value for the one-dimensional nanomaterials in the coating structure when 50% is used as the first target ratio. L50 may also be understood as an average length of the one-dimensional nanomaterials in the coating structure; and
L90 for the one-dimensional nanomaterials in the coating structure represents a length description value for the one-dimensional nanomaterials in the coating structure when 90% is used as the first target ratio;
the length description value for the one-dimensional nanomaterials in the coating structure indicates:
   a length of corresponding one-dimensional nanomaterials when the number of the one-dimensional nanomaterials in the coating structure is gradually accumulated in an order of length from short to long so that a ratio of a number accumulated to the corresponding one-dimensional nanomaterials to a total number of the one-dimensional nanomaterials in the coating structure reaches the first target ratio.

The one-dimensional nanomaterials in the coating structure satisfy L50/L10 > 1.3, L90/L50 > 1.3;
L10 for the one-dimensional nanomaterials in the coating structure indicates a length description value for the one-dimensional nanomaterials in the coating structure when 10% is used as the first target ratio;
L50 for the one-dimensional nanomaterials in the coating structure indicates a length description value for the one-dimensional nanomaterials in the coating structure when 50% is used as the first target ratio; and
L90 for the one-dimensional nanomaterials in the coating structure indicates a length description value for the one-dimensional nanomaterials in the coating structure when 90% is used as the first target ratio.

The above description shows statistical significance of the length description value for the coating structure, and an actual calculation method may be carried out according to general knowledge in the art when the length description value is actually to be determined.

In addition, regarding the length description value for the coating structure, although the above defines the meaning of the length description values by accumulating and determining the length description values based on the accumulation result, it does not mean that the statistical process is necessarily included in the actual preparation and acceptance processes. In an actual solution, for any product, as long as one-dimensional nanomaterials in the material layers are counted by using a value having the same statistical significance, and the obtained length description values have a law satisfying the above description, it does not deviate from the protection scope of this implementation. In some solutions, the above law in length may be satisfied by the selection of lengths of one-dimensional nanomaterials or by the preparation of one-dimensional nanomaterials having specific lengths.

In one example, for the one-dimensional nanomaterials in the coating structure, L10=110 nm, L50=310 nm, and L90=850 nm.

In the direction away from the base film, a result obtained by the fitting of the relationship between a length value for l50 for the one-dimensional nanomaterials in each material layer and a coating position (a position in a thickness direction of the coating) where the material layer is located may be understood by referring to Curve 1, Curve 2a and Curve 2b in FIG. 3. Therefore, it may be reflected in the curves that length values for l50 are decreased gradually with the increase of the thickness (that is, with the increase of a distance between a coating position where the material layer is located and the base film).

In FIG. 3, "Coating position" on the abscissa is to represent a coating position, where the material layer is located, in the coating structure along the thickness direction. If "Coating position" is characterized by percentage, it may be characterized as a percentage of a distance between a coating position where the material layer is located and the base film in an overall thickness of the coating structure. For example, 10% represents that the distance between the coating position and the base film accounts for 10% of the overall thickness of the coating structure.

For Curve 1, with the increase of the distance between the coating position and the base film, the length values of l50 for the one-dimensional nanomaterials in the material layer may be fitted as showing a linear change, at this time, the relationship between the length value x of l50 and the coating position Y may be presented as: Y= kx + b (k < 0, b > 0);
for Curve 2a, with the increase of the distance between the coating position where the material layer is located and the base film, the length values of l50 for the one-dimensional nanomaterials in the material layer may show a change trend which is first fast and then slow; and
for Curve 2b, with the increase of the distance between the coating position where the material layer is located and the base film, the length values of l50 for the one-dimensional nanomaterials in the material layer may show a change trend which is first slow and then fast.

In order to achieve the above linear change, the change trend which is first fast and then slow, and the change trend which is first slow and then fast, it may be achieved by the length arrangement of the one-dimensional nanomaterials in the coating structure. Further, the length arrangement of the one-dimensional nanomaterials in the coating structure may be selected according to the required change trend.

For example:
in order to achieve the linear change (for example, as shown in Curve 1), the length arrangement of the one-dimensional nanomaterials in the coating structure should meet the following requirement: 2 ≥ L90/L50 > 1.5;
in order to achieve the change which is first slow and then fast (for example, as shown in Curve 2b), the length arrangement of the one-dimensional nanomaterials in the coating structure should meet the following requirement: L50/L10 > 2; and 1.5 ≥ L90/L50 ≥ 1.3; and
in order to achieve the change which is first fast and then slow (for example, as shown in Curve 2a), the length arrangement of the one-dimensional nanomaterials in the coating should meet the following requirement: L90/L50 > 2.

Because the prior art is not committed to forming a layered structure, it is impossible for the prior art to disclose or enlighten the length arrangement made for different change trends in the above solution.

In the table below, some one-dimensional nanomaterials (lengths of which are characterized as fiber lengths in the table below) and their effects after application are described in detail:

| Serial Number | One-dimensi onal nanoma terial | L1 0 (n m) | L5 0 (n m) | L9 0 (n m) | L90/ L50 | L50/ L10 | Thickn ess of coatin g(µm) | Layer characteristic of coating (I50) | Heat resistance of Coated separator (180 °C 1h, MD% ) | Heat resistance of Coated separator (180 °C 1h, TD%) |
|---|---|---|---|---|---|---|---|---|---|---|
| Example 1 | Nanocellulose | 11 0 | 25 0 | 46 0 | 1.8 | 2.3 | 0.9 | Decreased layer by layer | 0.5 | 0.5 |
| Example 2 | Nanocellulose | 13 0 | 26 0 | 65 0 | 2.5 | 2.0 | 0.9 | Decreased layer by layer | 1.5 | 1.5 |
| Example 3 | Nanocellulose | 21 0 | 30 0 | 73 0 | 2.4 | 1.4 | 0.9 | Decreased layer by layer | 1.8 | 1.8 |
| Example 4 | Nanocellulose | 22 0 | 35 0 | 81 0 | 2.3 | 1.6 | 0.9 | Decreased layer by layer | 2 | 2 |
| Example 5 | Nanocellulose | 22 0 | 35 0 | 80 0 | 2.3 | 1.6 | 0.9 | Decreased layer by layer | 2.5 | 2.4 |
| Example 6 | Nanocellulose | 28 0 | 40 0 | 85 0 | 2.1 | 1.4 | 0.9 | Decreased layer by layer | 3.5 | 3.5 |
| Example 7 | Nanocellulose | 21 0 | 30 0 | 73 0 | 2.4 | 1.4 | 0.7 | Decreased layer by layer | 4.5 | 4.4 |
| Example 8 | Nanocellulose | 21 0 | 30 0 | 73 0 | 2.4 | 1.4 | 0.5 | Decreased layer by layer | 10 | 9 |

| | | | | | | | | | | |
|---|---|---|---|---|---|---|---|---|---|---|
| Example 9 | Nanocellulose | 21 0 | 30 0 | 73 0 | 2.4 | 1.4 | 0.3 | Decreased layer by layer | 12 | 11 |
| Example 10 | Nanocellulose | 45 | 67 | 85 | 1.3 | 1.5 | 0.9 | Decreased layer by layer | 25 | 24 |
| Example 11 | Nanocellulose | 45 | 72 | 13 0 | 1.8 | 1.6 | 0.9 | Decreased layer by layer | 20 | 16 |
| Example 12 | Nanocellulose | 95 | 14 0 | 18 0 | 1.3 | 1.5 | 0.9 | Decreased layer by layer | 23 | 22 |
| Example 13 | Nanocellulose | 13 0 | 14 0 | 17 0 | 1.2 | 1.1 | 0.9 | Decreased layer by layer | 25 | 26 |
| Example 14 | Nanocellulose | 55 0 | 66 0 | 28 00 | 4.2 | 1.2 | 0.9 | Decreased layer by layer | 26 | 28 |
| Example 15 | Nanocellulose | 56 0 | 85 0 | 14 00 | 1.6 | 1.5 | 0.9 | Decreased layer by layer | 23 | 22 |
| Example 16 | Hydroxy apatite nanowire nanocellulose | 11 00 | 18 00 | 29 00 | 1.6 | 1.6 | 0.9 | Decreased layer by layer | 25 | 27 |

| | | | | | | | | | | |
|---|---|---|---|---|---|---|---|---|---|---|
| Compa rative Example 1 | Aramid nanofiber | 56 0 | 85 0 | 14 00 | 1.6 | 1.5 | 0.9 | Disorderly arrang ed | 35 | 34 |
| Compa rative Example 2 | Hydroxy apatite nanowire | 11 00 | 18 00 | 29 00 | 1.6 | 1.6 | 0.9 | Disorderly arrang ed | 44 | 46 |
| Compa rative Examp le 3 | Nanocellulose | 22 0 | 35 0 | 81 0 | 2.3 | 1.6 | 0.9 | Disorderly arrang ed | 32 | 31 |
| Compa rative Example 4 | Nanocellulose | 22 0 | 35 0 | 81 0 | 2.3 | 1.6 | 0.9 | Increased layer by layer | 25 | 20 |
| Compa rative Example 5 | Alumina coating | | | | | | 2 | | 56 | 54 |
| Compa rative Example 6 | Base film | | | | | | / | | 85 | 88 |

L represents a length of one-dimensional nanomaterials.

From Example 1 to Example 6, it can be seen that when L is in a suitable range, the coated separator has the best heat resistance, and when L is too small (Examples 10, 11 and 12) or too large (Examples 15 and 16), the heat resistance of the coated separator deteriorates.

Through research and analysis, the main reasons for this result are as below.

When the length of one-dimensional nanomaterials is too small, a stacking degree of the one-dimensional nanomaterials is not enough to form a staggered network structure, so the heat resistance is insufficient, and only when the thickness is increased, the heat resistance of the coating is effectively improved. When the length of the one-dimensional nanomaterials is too long, the one-dimensional nanomaterials (i.e., nanowires) may form twisted structures, and when the twisted structures are deposited on a surface of a separator, the twisted structures may fold themselves, resulting in insufficient contact with other nanowires, and the interaction may be weakened (as shown in Examples 10, 11 and 12).

In addition, when one-dimensional nanomaterials are too long, gaps in the deposited coating are large, and a distance between contact points is too far. When external force is applied (such as contraction of the base film caused by heating), these contact points fail to transfer the force in time, resulting in the collapse of the whole coating structure, thus the thermal shrinkage of the coated separator cannot be inhibited (as shown in Examples 15 and 16).

Therefore, when L is between 100 nm and 900 nm, the coating will have both a thin coating structure (the thickness of the coating structure is less than 1 µm) and excellent heat resistance (180°C), that is, the layered structure characteristics may make the coating have an excellent heat resistance at a thin thickness (less than 1 µm). When the length of nanowires (i.e. one-dimensional nanomaterials) is between 100 nm and 900 nm, the nanowires (i.e. the one-dimensional nanomaterials) are deposited on a surface of a base film to form a layered structure (i.e. layered one-dimensional nanomaterials with different lengths), and in the process of deposition on the base film, due to surface energy, the longest one-dimensional nanomaterials (which have the largest surface energy, and are most unstable, and once contact with an interface having small surface energy, it is most likely for the adhesion to occur) are deposited first, then the longer nanowires are subsequently deposited, then the shortest nanowires are finally deposited, thus forming a layered structure in which one-dimensional nanomaterials are stacked gradually in an order from long to short in length.

Further, in adjacent material layers, gaps between one-dimensional nanomaterials in a lower layer are partially or completely filled by one-dimensional nanomaterials in an upper layer.

It can be seen that, due to large gaps formed by the stacking of long nanomaterials, the lower the nanomaterials are located in layers, the larger the gaps, and shorter nanomaterials in an upper layer thereto may fill these gaps to a certain extent. After layer-by-layer deposition, there are not too many gaps in the coating and there are more contact points, so the tight structure of the coating may inhibit thermal deformation of the separator when the coating is heated.

Example 4 is compared with Comparative Example 3 and Comparative Example 4, Example 15 is compared with Comparative Example 1, and Example 16 is compared with Comparative Example 2.

It can be seen that when the lengths of one-dimensional nanomaterials decrease layer by layer along the coating (which is reflected by the decrease of the length description values for the one-dimensional nanomaterials in respective material layers), the coated separator has the best heat resistance. When the lengths of one-dimensional nanomaterials increase layer by layer along the coating or are arranged in disorder, the heat resistance of the coated separator is not good. The main reason for this phenomenon is that only the stacking manner in which one-dimensional nanofibers are decreased in length layer by layer makes the coating have the greatest stacking density and thus the nanofibers have the most contact with each other. However, in a situation in which one-dimensional nanofibers are increased in length layer by layer or are arranged disorderly, the stacking density of the coating is small, so the improvement of the heat resistance is very limited.

In a further solution, some solutions may be introduced to ensure the layering of one-dimensional nanomaterials, for example, the layering of one-dimensional nanomaterials is mainly completed in a coating and drying process. In order to achieve the purpose of layering in a heating process, a temperature-sensitive polymer, such as poly(N-isopropylacrylamide) (PNIPAM) having a certain ratio of hydrophobic isopropyl groups and hydrophilic amide groups in a molecule, may also be added. When the temperature is lower than 40°C, there is a strong hydrogen bonding force between hydrophilic amide groups and hydroxyl groups on the one-dimensional nanomaterials, so that polymer chains have good affinity with the one-dimensional nanomaterials and the solvent, at this time, PNIPAM polymer chains are in an extended state, show water swelling and poor solution fluidity. When the temperature rises above 40°C, the hydrophilic force between water molecules and the amide groups is weakened, and the hydrophobic force between the isopropyl groups in PNIPAM molecular chains is strengthened, and the hydrophobic effect in PNIPAM polymer chains is gradually strengthened and plays a leading role, so that polymer chains aggregate with each other through hydrophobic effect to form a hydrophobic layer, resulting in the discharge of water molecules and the phase transformation. At this time, polymer chains are transformed from loose-coil-structure-like shape to tight-colloidal-particle-like shape, and the fluidity of the solution is enhanced. Because when the length of one-dimensional nanomaterials is longer, the amount of PNIPAM carried thereon is more, the hydrophobicity of the one-dimensional nanomaterials is stronger, therefore, the one-dimensional nanomaterials are first easier to be sedimented. It can be seen that the introduction of PNIPAM may help to ensure the achievement of layering.

It can be seen that in the above solutions, because the length of one-dimensional nanomaterials is related to surface energy, and further related to adhesion ability onto the base film, the distribution of one-dimensional nanomaterials layer by layer based on the adhesion ability in the present invention may achieve ordered distribution, compared with random distributed one-dimensional nanomaterials. This is because one-dimensional nanomaterials are ordered, thereby avoiding the formation of possible large gaps due to random and disordered distribution, and ensuring a sufficient number of contact points. Further, gaps between one-dimensional nanomaterials in some layers are partially or completely filled by one-dimensional nanomaterials in upper layers next to them, respectively, thus gaps are further reduced and contact points are increased under a condition of ensuring the ordering of one-dimensional nanomaterials.

In addition to the separator and the base film mentioned above, other material layers may also be introduced in specific examples.

An embodiment of the present invention also provides a battery, which includes the separator involved in the above alternative solutions.

The battery may be, for example, a lithium-ion battery, and further, the separator may be disposed on a surface of the battery. In addition, besides the separator, other existing or improved structural layers may be arranged inside and outside the separator.

Please refer to FIG. 2, an embodiment of the present invention also provides a method for preparing a separator, which is used for preparing the separator involved in the first aspect and its alternative solutions. The method includes:
S21: dispersing one-dimensional nanomaterials having different lengths in a same dispersant or different dispersants to obtain at least one dispersion solution;
S22: forming at least one corresponding slurry based on the at least one dispersion solution; and
S23: coating the at least one slurry onto the base film, and drying the base film and the slurry to obtain the separator.

In an example of step S23, the coating may be performed only once and the drying may be performed only once, at this time, the coated slurry may contain one-dimensional nanomaterials having different lengths.

In another example of step S23, the coating may be performed for many times and the drying may be performed once after each coating, at this time, slurries coated in respective times may be of different kinds, and different slurries may be sequentially coated according to the lengths of one-dimensional nanomaterials from short to long. Taking coating for three times and coating for three layers as an example, a slurry containing the longest one-dimensional nanomaterials may be coated on the base film first, and after drying, a slurry containing longer one-dimensional nanomaterials is coated thereon, and after drying, the slurry containing the shortest one-dimensional nanomaterials may be coated thereon.

In addition, for each coating, a slurry of one kind may be used, slurries of two or more kinds may be mixed and coated.

In one implementation, at least some one-dimensional nanomaterials having different lengths may be achieved based on the selection of raw materials for one-dimensional nanomaterials. For example, when one-dimensional nanomaterials of different components are selected, one-dimensional nanomaterials having different lengths may be formed.

In other examples, one-dimensional nanomaterials having different lengths may also be formed by corresponding technical means.

In one example, before step S21, the method further includes:
S24: breaking raw components of one-dimensional nanomaterials or breaking broken one-dimensional nanomaterials, and forming at least some one-dimensional nanomaterials having different lengths through performing the breaking for one or more times.

By breaking one-dimensional nanomaterials, shorter one-dimensional nanomaterials may be formed based on raw components of one-dimensional nanomaterials having a length. For example, the breaking of raw components into half may form one-dimensional nanomaterials, and in other examples, one-dimensional nanomaterials may be achieved without using the method of breaking raw components into half.

Any existing means or improved means that may achieve the breaking of one-dimensional nanomaterials may be used as a specific example of the embodiments of the present invention. In a specific example, the breaking of one-dimensional nanomaterials may be achieved by etching one-dimensional nanomaterials, for example, by the means of etching one-dimensional nanomaterials, the one-dimensional nanomaterials may be etched to have a length half of that of raw components.

Based on the required layering, raw components may be broken once or for many times. For example, one-dimensional nanomaterials may be etched to have half the length of the raw components, and then the one-dimensional nanomaterials having half the length may be reserved, and then another part of the one-dimensional nanomaterials having half the length may be broken to obtain one-dimensional nanomaterials having one-quarter the length. At this time, a three-layered structure may be formed. In other examples, a part of the one-dimensional nanomaterials having one-quarter the length may be further broken, and the number of times of breaking may be optionally configured as required.

In one example, before step S21, the method further includes:
S25: performing at least one of the following bonding processes, and forming at least some one-dimensional nanomaterials having different lengths through performing the bonding for one or more times:
bonding one raw component of an one-dimensional nanomaterial to one end of another raw component;
bonding a bonded one-dimensional nanomaterial to one end of one raw component; or
bonding the bonded one-dimensional nanomaterial to one end of another bonded one-dimensional nanomaterial.

It can be seen that bonded objects may be one end of one raw component and one end of another raw component, may be one end of one raw component and one end of a bonded one-dimensional nanomaterial, and may also be one end of a bonded one-dimensional nanomaterial and one end of another bonded one-dimensional nanomaterial.

Through the bonding of one-dimensional nanomaterials, longer one-dimensional nanomaterials may be formed based on raw components of one-dimensional nanomaterials having one length, for example, two raw components may be bonded to form an one-dimensional nanomaterial having twice the length. In other examples, the bonding may also be achieved by using raw components (or bonded one-dimensional nanomaterials) having different lengths.

Any existing means or improved means that may achieve the bonding of one-dimensional nanomaterials may be taken as a specific example of the embodiments of the present invention.

For example, the bonding of one-dimensional nanomaterials may be achieved based on a material rich in hydroxyl functional groups (such as polyethylene glycol (PEG)), and further, the bonding mentioned above may include:
mixing one-dimensional nanomaterials to be bonded with a material rich in hydroxyl functional groups (such as PEG) in a solution;
adding molecular sieve particles into the solution as a catalyst; and
subjecting the solution to heating, then cooling, and filtering to remove the molecular sieve, so as to obtain bonded one-dimensional nanomaterials.

In a specific example, nanocellulose is taken as an example. The content of hydroxyl groups at an end of nanocellulose is obviously higher than that at a middle region thereof. In order to increase the length of nanocellulose, the activity of hydroxyl groups may be fully utilized as follows:
(1) mixing nanocellulose and polyethylene glycol (PEG), where PEG has a molecular weight of 50,000-1,000,000 g/mol, and PEG accounts for 1% of nanocellulose, and fully and uniformly stirring them to form a corresponding solution;
(2) adding 13A molecular sieve particles having a size of 1 mm to 10 mm into the solution, where the molecular sieve is a catalyst;
(3) hydrothermally heating the solution to 80°C for 1 to 2 hours; and
(4) cooling the solution to normal temperature, and filtering it to remove 13A molecular sieve particles, so as to obtain bonded nanocellulose.

In the above solution, by adding a material rich in hydroxyl functional groups (such as PEG), a bridge may be connected between nanocellulose, and by using a molecular sieve (such as 13A molecular sieve) as a catalyst, the polymerization reaction between PEG and nanocellulose can be accelerated, a structure of nanocellulose-PEG-nanocellulose may be finally formed. Based on the required layering, raw components may be subjected to bonding once or for multiple times. For example, raw components of one-dimensional nanomaterials may be bonded to form one-dimensional nanomaterials having twice the length of the raw components, and then a part of the one-dimensional nanomaterials having twice the length may be reserved, and then another part of the one-dimensional nanomaterials having twice the length may be bonded to the raw components or the one-dimensional nanomaterials having twice the length to obtain one-dimensional nanomaterials having three or four times the length. At this time, a three-layered structure may be formed, and in other examples, the bonding may be further carried out, and the number of times of the bonding may be determined according to requirements.

In one solution of step S21, one-dimensional nanomaterials having different lengths may be dispersed in a same dispersant, and then the layering can be achieved after coating based on a slurry corresponding to the same dispersant. In another solution of step S21, different dispersants may be formed based on one-dimensional nanomaterials having different lengths (lengths of one-dimensional nanomaterials in different dispersants are different), and then different dispersion solutions and slurries may be formed. During coating, various slurries may also be coated layer-by-layer based on the lengths of the one-dimensional nanomaterials.

In an example, in step S21, one-dimensional nanomaterials having various lengths may be fully dispersed in a dispersant, and the dispersant is selected to be water, ethanol, methanol, etc. The dispersion method may be, for example, ultrasonic treatment, high-speed stirring, high-pressure homogenization, sand grinding dispersion etc., to achieve uniform dispersion of the one-dimensional nanomaterials in the dispersant. The numerical range of the concentration of the one-dimensional nanomaterials in the dispersion solution may be from 0.01 wt% to 50 wt%.

In one implementation, step S22 may specifically include sequentially adding an adhesive and an auxiliary agent into the dispersion.

The adhesive therein may be any material with an adhesive effect, and may include for example at least one of the following: polyacrylic acid, lithium polyacrylate, polyvinyl alcohol, polyvinylpyrrolidone, and carboxymethyl cellulose. However, it is not limited to the examples here. According to the size and material of one-dimensional nanomaterials, an appropriate adhesive may be adaptively selected without departing from the scope of the embodiments of the present invention.

The auxiliary agent therein may include for example at least one of the following: glycerol, fluorinated alkyl ethoxy alcohol ether, sodium styrene-butadiene naphthalene sulfonate, sodium hydroxyethyl sulfate, and sodium dodecyl sulfate.

In step S23, the slurry may be coated on the base film by means of concave roller coating, spray coating, dip coating, extrusion coating, etc., and after drying, a separator composited with one-dimensional nanomaterials may be obtained. Meanwhile, the slurry is coated at a single side (that is, coated on a surface of the base film at one side) or double sides (that is, coated on surfaces of the base film at both sides).

In one implementation, as mentioned above, poly(N-isopropylacrylamide) (PNIPAM) may also be added, that is, the preparation method further includes adding poly(N-isopropylacrylamide) into the dispersion or the slurry. Therefore, when one-dimensional nanomaterials have a longer length, the amount of PNIPAM carried thereon is more, the hydrophobicity of the one-dimensional nanomaterials is stronger, therefore, the one-dimensional nanomaterials are first easier to be sedimented. It can be seen that the introduction of PNIPAM may help to ensure the achievement of layering.

In the description of this specification, the description of reference terms "one implementation", "one embodiment", "specific implementation process" and "one example" means that specific features, structures, materials or characteristics described in connection with this embodiment or example are included in at least one embodiment or example of the present invention. In this specification, the schematic expressions of the above terms do not necessarily refer to the same embodiment or example. Moreover, the specific features, structures, materials or characteristics described may be combined in any one or more embodiments or examples in a suitable manner.

Finally, it should be noted that the above embodiments are only used to illustrate the technical solutions of the present application, but not to limit them. Although the present invention is illustrated in detail with reference to the above embodiments, those of ordinary skill in the art should understand that they may still make modifications to the technical solutions described in the above embodiments or make equivalent substitutions to some or all of the technical features; and these modifications or substitutions do not make the essence of the corresponding technical solutions deviate from the scope of the technical solutions of the embodiments of the present application.

## Claims

1. A separator for a battery, comprising a base film and a coating structure disposed on the base film, wherein the coating structure comprises a plurality of material layers, and each material layer contains one-dimensional nanomaterials, and average lengths of one-dimensional nanomaterials in respective material layers are decreased layer by layer in a direction away from the base film.

2. The separator according to claim 1, wherein the one-dimensional nanomaterials in the coating structure satisfy: 5 ≥ L50/L10 ≥ 1.3, and 4 ≥ L90/L50 ≥ 1.3;
wherein:
L10 represents a length description value for the one-dimensional nanomaterials in the coating structure when 10% is used as a first target ratio;
L50 represents a length description value for the one-dimensional nanomaterials in the coating structure when 50% is used as the first target ratio;
L90 represents a length description value for the one-dimensional nanomaterials in the coating structure when 90% is used as the first target ratio; and
the length description value for the one-dimensional nanomaterials in the coating structure indicates a length of corresponding one-dimensional nanomaterials when the number of the one-dimensional nanomaterials in the coating structure is gradually accumulated in an order of length from short to long so that a ratio of a number accumulated to the corresponding one-dimensional nanomaterials to a total number of the one-dimensional nanomaterials in the coating structure reaches the first target ratio.

3. according to claim 2, a length value of L10 for the one-dimensional nanomaterials in the coating structure is between 100 nm and 300 nm;
a length value of L50 for the one-dimensional nanomaterials in the coating structure is between 250 nm and 400 nm; and
a length value of L90 for the one-dimensional nanomaterials in the coating structure is between 350 nm and 900 nm.

4. The separator according to claim 1, wherein different length description values for the one-dimensional nanomaterials in different material layers are formed with respect to a same second target ratio;
a length description value for the one-dimensional nanomaterials in each material layer indicates:
a length of corresponding one-dimensional nanomaterials when the number of the one-dimensional nanomaterials in each material layer is gradually accumulated in an order of length from short to long so that a ratio of a number accumulated to the corresponding one-dimensional nanomaterial to a total number of the one-dimensional nanomaterials in each material layer reaches the second target ratio which is not 50%;
the length description values for the one-dimensional nanomaterials in the material layers are decreased gradually with respect to the same second target ratio in the direction away from the base film; and
further, the second target ratio is in a range of 5%-40%, or in a range of 60%-99%.

5. The separator according to any one of claims 1 to 3, wherein the one-dimensional nanomaterials comprise at least one of the following: nanocellulose, aramid nanofiber, and polyimide nanofiber.

6. The separator according to claim 1, wherein in a first material layer and a second material layer which are adjacent to each other, gaps between one-dimensional nanomaterials in the first material layer are partially or completely filled with one-dimensional nanomaterials in the second material layer; wherein the first material layer is located at one side of the second material layer facing the base film.

7. A battery, comprising the separator according to any one of claims 1 to 6.

8. A method for preparing a separator, wherein the method is used for preparing the separator according to any one of claims 1 to 6, and comprises:
dispersing one-dimensional nanomaterials having different lengths in a same dispersant or different dispersants to obtain at least one dispersion solution;
forming at least one corresponding slurry based on the at least one dispersion solution; and
coating the at least one slurry onto the base film, and drying the base film and the slurry to obtain the separator.

9. The method according to claim 8, wherein before the dispersing the one-dimensional nanomaterials having different lengths in the same dispersant or different dispersants to obtain the at least one dispersion solution, the method further comprises:
breaking raw components of one-dimensional nanomaterials or breaking broken one-dimensional nanomaterials, and forming at least some one-dimensional nanomaterials having different lengths through performing the breaking for one or more times.

10. The method according to claim 8, wherein before the dispersing the one-dimensional nanomaterials having different lengths in the same dispersant or different dispersants to obtain the at least one dispersion solution, the method further comprises:
performing at least one of the following bonding processes, and forming at least some one-dimensional nanomaterials having different lengths through performing the bonding for one or more times:
bonding one raw component of an one-dimensional nanomaterial to one end of another raw component;
bonding a bonded one-dimensional nanomaterial to one end of one raw component; or
bonding the bonded one-dimensional nanomaterial to one end of another bonded one-dimensional nanomaterial.

11. The method according to claim 10, wherein the bonding comprises:
mixing one-dimensional nanomaterials to be bonded with a material rich in hydroxyl functional groups in a solution;
adding molecular sieve particles into the solution as a catalyst; and
subjecting the solution to heating, then cooling, and filtering to remove the molecular sieve so as to obtain bonded one-dimensional nanomaterials.

12. The method according to any one of claims 8 to 11, wherein the forming the at least one corresponding slurry based on the at least one dispersion solution comprises:
sequentially adding an adhesive and an auxiliary agent into the dispersion solution.

13. The method according to claim 11, wherein the adhesive comprises at least one of the following: polyacrylic acid, lithium polyacrylate, polyvinyl alcohol, polyvinylpyrrolidone, and carboxymethyl cellulose; and
the auxiliary agent comprises at least one of the following: glycerol, fluorinated alkyl ethoxy alcohol ether, sodium styrene-butadiene naphthalene sulfonate, sodium hydroxyethyl sulfate, and sodium dodecyl sulfate.

14. The method according to any one of claims 8 to 11, further comprising:
adding poly(N-isopropylacrylamide) into the dispersion solution or the slurry.
